(19) Europäisches Patentamt / European Patent Office / Office européen des brevets

(11) **EP 4 019 667 A1**

(12) **EUROPÄISCHE PATENTANMELDUNG**

(43) Veröffentlichungstag:
**29.06.2022   Patentblatt 2022/26**

(21) Anmeldenummer: **20217070.0**

(22) Anmeldetag: **23.12.2020**

(51) Internationale Patentklassifikation (IPC):
**C25B 1/04** (2021.01)        **C25B 9/23** (2021.01)
**C25B 11/054** (2021.01)       **C25B 11/067** (2021.01)
**C25B 11/091** (2021.01)

(52) Gemeinsame Patentklassifikation (CPC):
**C25B 1/04; C25B 9/23; C25B 11/054;
C25B 11/067; C25B 11/091**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder:
• **Heraeus Deutschland GmbH & Co. KG
  63450 Hanau (DE)**
• **Greenerity GmbH
  63457 Hanau-Wolfgang (DE)**
• **Technische Universität München
  80333 München (DE)**

(72) Erfinder:
• **GEBAUER, Christian
  63450 Hanau (DE)**

• **KEMMER, Martina
  63450 Hanau (DE)**
• **GASTEIGER, Hubert
  80469 München (DE)**
• **BERNT, Maximilian
  80807 München (DE)**
• **HARTIG-WEISS, Alexandra
  91560 Heilsbronn (DE)**
• **BYRKNES, Jan
  61118 Bad Vilbel (DE)**
• **EICKES, Christian
  60431 Frankfurt am Main (DE)**
• **GHIELMI, Alessandro
  60322 Frankfurt am Main (DE)**

(74) Vertreter: **Glas, Holger
  Maiwald Patentanwalts- und
  Rechtsanwaltsgesellschaft mbH
  Elisenhof
  Elisenstraße 3
  80335 München (DE)**

(54) **BESCHICHTETE MEMBRAN FÜR DIE WASSERELEKTROLYSE**

(57)    Die vorliegende Erfindung betrifft eine beschichtete Membran, enthaltend
- eine Membran mit einer Vorder- und einer Rückseite,
- eine auf der Vorderseite der Membran vorliegende katalysatorhaltige Beschichtung,
- der Katalysator enthaltend
- ein Trägermaterial, das eine BET-Oberfläche von maximal 80 $m^2$/g aufweist,
- eine auf dem Trägermaterial vorliegende iridiumhaltige Beschichtung, die ein Iridiumoxid, ein Iridiumhydroxid oder ein Iridiumhydroxidoxid oder ein Gemisch aus mindestens zwei dieser Iridiumverbindungen enthält,

- wobei der Katalysator Iridium in einer Menge von maximal 60 Gew% enthält und
- die auf der Membranvorderseite vorliegende Beschichtung eine Iridium-Beladung von maximal 0,4 mg Iridium / $cm^2$ aufweist.

Figur 1

**Beschreibung**

Die vorliegende Erfindung betrifft eine beschichtete Membran, die als Membran-Elektroden-Einheit für die Wasserelektrolyse verwendbar ist.

Wasserstoff wird als Energieträger der Zukunft angesehen, da es eine nachhaltige Energiespeicherung ermöglicht, langfristig verfügbar ist und auch mit regenerativen Energietechnologien herstellbar ist.

Derzeit ist die Dampfreformierung das gebräuchlichste Verfahren zur Herstellung von Wasserstoff. Bei der Dampfreformierung werden Methan und Wasserdampf zu Wasserstoff und CO umgesetzt. Die Wasserelektrolyse stellt eine weitere Variante der Wasserstoffherstellung dar. Über die Wasserelektrolyse kann Wasserstoff in hoher Reinheit erhalten werden.

Es gibt verschiedene Methoden der Wasserelektrolyse, insbesondere eine alkalische Wasserelektrolyse, eine saure Wasserelektrolyse unter Verwendung einer Polymerelektrolytmembran ("*PEM*"*;* PEM-Wasserelektrolyse) und eine Hochtemperatur-Feststoffoxid-Elektrolyse.

Eine Wasserelektrolysezelle enthält eine Halbzelle mit einer Elektrode, an der die Sauerstoffentwicklungsreaktion (englisch: "*oxygen evolution reaction*"*, "OER*") stattfindet, sowie eine weitere Halbzelle mit einer Elektrode, an der die Wasserstoffentwicklungsreaktion (englisch: "*hydrogen evolution reaction*" "*HER*") stattfindet. Die Elektrode, an der die Sauerstoffentwicklungsreaktion stattfindet, wird als Anode bezeichnet.

Eine Übersicht zur Technologie der Wasserelektrolyse, insbesondere der PEM-Wasserelektrolyse, findet sich beispielsweise bei M. Carmo et al., International Journal of Hydrogen Energy, 38, 2013, S. 4901-4934; und V. Himabindu et al., Materials Science for Energy Technologies, 2, 2019, S. 442-454.

Bei einer Polymerelektrolytmembran-Wasserelektrolysezelle (nachfolgend auch als PEM-Wasserelektrolysezelle bezeichnet) fungiert die Polymermembran als Protonentransportmedium und isoliert die Elektroden elektrisch voneinander. Die Katalysatorzusammensetzungen für die Sauerstoffentwicklungsreaktion und die Wasserstoffentwicklungsreaktion werden beispielsweise als Anode und Kathode auf Vorder- und Rückseite der Membran aufgebracht (engl.: "*Catalyst-Coated Membrane CCM*"), so dass eine Membran-Elektroden-Einheit erhalten wird (engl.: "*Membrane Electrode Assembly MEA*")*.*

Die an der Anode einer PEM-Wasserelektrolysezelle ablaufende Sauerstoffentwicklungsreaktion lässt sich durch folgende Reaktionsgleichung wiedergeben:

$$2\,H_2O \rightarrow 4\,H^+ + O_2 + 4\,e^-$$

Aufgrund ihres komplexen Reaktionsmechanismus weist die Sauerstoffentwicklungsreaktion eine langsame Reaktionskinetik auf, weshalb ein signifikantes Überpotential an der Anode benötigt wird, um ausreichend hohe Umsatzraten zu erzielen. Außerdem läuft die Sauerstoffentwicklungsreaktion unter sehr sauren Bedingungen (d.h. niedrigem pH-Wert) ab.

Der effiziente Betrieb einer Wasserelektrolysezelle erfordert die Anwesenheit von Katalysatoren. Da die Sauerstoffentwicklungsreaktion an der Anode unter sehr korrosiven Bedingungen abläuft (niedriger pH-Wert, signifikante Überspannung), kommen als geeignete Katalysatormaterialien insbesondere Edelmetalle wie Ruthenium und Iridium und deren Oxide in Frage.

Die katalytisch wirksamen Metalle oder Metalloxide können optional auf einem Trägermaterial vorliegen, um so die spezifische Oberfläche des Katalysatormaterials zu erhöhen.

Auch bei den Trägermaterialien kommen nur solche Materialien in Frage, die unter den sehr korrosiven Bedingungen der Sauerstoffentwicklungsreaktion eine ausreichend hohe Stabilität aufweisen, beispielsweise Übergangsmetalloxide wie $TiO_2$ oder Oxide bestimmter Hauptgruppenelemente wie z.B. $Al_2O_3$. Viele dieser oxidischen Trägermaterialien sind jedoch elektrisch nichtleitend, was sich nachteilig auf die Effizienz der Sauerstoffentwicklungsreaktion und damit auch der Wasserelektrolyse auswirkt.

Eine Übersicht zu Katalysatoren für die Sauerstoffentwicklungsreaktion unter sauren Bedingungen (d.h. an der Anode einer PEM-Wasserelektrolysezelle) findet sich beispielsweise bei P. Strasser et al., Adv. Energy Mater., 7, 2017, 1601275; und F.M. Sapountzi et al., Progress in Energy and Combustion Science, 58, 2017, S. 1-35.

WO 2005/049199 A1 beschreibt eine Katalysatorzusammensetzung für die Sauerstoffentwicklungsreaktion bei der PEM-Wasserelektrolyse. Dieser Katalysator enthält Iridiumoxid und ein als Trägermaterial fungierendes anorganisches Oxid. Das Trägermaterial weist eine BET-Oberfläche im Bereich von 50 m²/g bis 400 m²/g auf und liegt in der Zusammensetzung in einer Menge von weniger als 20 Gew% vor. Somit weist die Katalysatorzusammensetzung einen hohen Iridiumgehalt auf.

Die Vorkommen an Iridium sind recht begrenzt. In den Publikationen von M. Bernt et al., "Analysis of Voltage Losses in PEM Water Electrolyzers with Low Platinum Group Metal Loadings", J. Electrochem. Soc. 165, 2018, F305-F314, und M. Bernt et al., "Current Challenges in Catalyst Development for PEM Water Electrolyzers", Chem. Ing. Tech., 2020, 92, Nr. 1-2, S. 31-39, wird erwähnt, dass ein derzeit üblicher Beladungsgrad an Iridium auf der Anodenseite der katalysatorbeschichteten Membran etwa 2 mg Iridium pro $cm^2$ beschichteter Membranfläche beträgt, dieser Beladungsgrad aber noch sehr deutlich reduziert werden muss, um einen großskaligen Einsatz der PEM-Elektrolyse auf Basis der verfügbaren Iridiummenge zu ermöglichen. Als Zielgröße für den flächenbezogenen Iridium-Beladungsgrad werden 0,05 mg Iridium pro $cm^2$ Anodenelektrodenfläche angegeben.

M. Bernt et al., J. Electrochem. Soc. 165, 2018, F305-F314, beschreiben die Herstellung katalysatorbeschichteter Membrane unter Verwendung einer kommerziell erhältlichen Katalysatorzusammensetzung, die ein auf $TiO_2$ geträgertes $IrO_2$ enthält. Die Katalysatorzusammensetzung enthält Iridium (in Form von $IrO_2$) in einer Menge von 75 Gew%. Um eine Anode, die einen möglichst geringen flächenbezogenen Iridium-Beladungsgrad aufweist, zu erhalten, wurde die Schichtdicke der Anode reduziert. Es wurden flächenbezogene Iridium-Beladungsgrade im Bereich von 0,20-5,41 mg Iridium/$cm^2$ realisiert und hinsichtlich ihrer Effizienz bei der Wasserelektrolyse getestet. Während bei Beladungsgraden von 1-2 mg Iridium/$cm^2$ noch gute Ergebnisse erhalten wurden, führten Beladungsgrade von weniger als 0,5 mg Iridium/$cm^2$ aufgrund der geringen Schichtdicke der Anode und der daraus resultierenden inhomogenen Elektrodenschicht zu einer signifikanten Verschlechterung der Effizienz der Wasserelektrolyse. Es wird in dieser Publikation daher vorgeschlagen, die Struktur oder Morphologie des Katalysators so zu ändern, dass sich in der Anode eine geringere Iridium-Packungsdichte ergibt und sich auf diese Weise bei gleichbleibender Schichtdicke der Anode (z.B. 4-8 $\mu$m) reduzierte Iridium-Beladungsgrade von weniger als 0,5 mg Iridium/$cm^2$ realisieren lassen.

M. Bernt et al., Chem. Ing. Tech., 2020, 92, Nr. 1-2, S. 31-39, erwähnen, dass ein möglicher Ansatz für die Absenkung der Iridium-Packungsdichte in der Anode darin besteht, ein Trägermaterial hoher spezifischer Oberfläche (d.h. hoher BET-Oberfläche) zu verwenden und das katalytisch aktive metallische Iridium oder das Iridiumoxid möglichst fein auf diesem Trägermaterial zu dispergieren. In diesem Zusammenhang wird in der Publikation erwähnt, dass viele der üblichen Trägermaterialien ausreichend hoher Stabilität wie z.B. $TiO_2$ elektrisch nicht leitfähig sind und daher eine relativ große Menge an Ir oder $IrO_2$ (> 40 Gew%) in dem Katalysator benötigt wird, um ein möglichst zusammenhängendes Netzwerk an Ir- oder $IrO_2$-Nanopartikeln auf der Oberfläche des elektrisch nicht leitfähigen Trägermaterials zu generieren. In der Publikation wird als möglicher Lösungsansatz auch beschrieben, dass das Iridiumoxid auf einem elektrisch leitfähigen Trägermaterial, beispielsweise einem Antimon-dotierten Zinnoxid nanopartikulär dispergiert werden kann.

EP 2 608 297 A1 beschreibt einen Katalysator für die Wasserelektrolyse, der ein als Trägermaterial fungierendes anorganisches Oxid und ein auf diesem Trägermaterial dispergiertes Iridiumoxid enthält. Das oxidische Trägermaterial liegt in dem Katalysator in einer Menge von 25-70 Gew% vor und weist eine BET-Oberfläche im Bereich von 30-200 $m^2/g$ auf.

C. Van Pham et al., Applied Catalysis B: Environmental, 269, 2020, 118762, beschreiben einen Katalysator für die Sauerstoffentwicklungsreaktion der Wasserelektrolyse, der eine Kern-Schale-Struktur aufweist, wobei $TiO_2$ den Kern und $IrO_2$ die Schale bilden. Die Kern-Schale-Katalysatorpartikel enthalten 50 Gew% $IrO_2$. Über Röntgenbeugung und die Scherrer-Gleichung wird für die $IrO_2$-Schale eine mittlere Kristallitgröße von 10 nm bestimmt. Es werden katalysatorbeschichtete Membrane hergestellt, deren Anode einen flächenbezogenen Iridium-Beladungsgrad von 1,2 mg Iridium/$cm^2$ bzw. 0,4 mg Iridium/$cm^2$ aufweist.

EP 2 608 298 A1 beschreibt einen Katalysator, der (i) ein Trägermaterial mit Kern-Schale-Struktur und (ii) metallische Nanopartikel, die auf diesem Kern-Schale-Träger dispergiert sind, enthält. Der Katalysator wird für Brennstoffzellen verwendet.

Eine Aufgabe der vorliegenden Erfindung ist die Bereitstellung einer beschichteten Membran, die als Membran-Elektroden-Einheit in der sauren Wasserelektrolyse verwendbar ist und dabei eine möglichst effiziente Sauerstoffentwicklungsreaktion an der als Anode fungierenden Beschichtung ermöglicht. Insbesondere sollte die beschichtete Membran eine hohe Aktivität bei niedrigem Iridiumgehalt ermöglichen.

Gelöst wird die Aufgabe durch eine beschichtete Membran, enthaltend

- eine Membran mit einer Vorder- und einer Rückseite,
- eine auf der Vorderseite der Membran vorliegende katalysatorhaltige Beschichtung,

  - der Katalysator enthaltend

    - ein Trägermaterial, das eine BET-Oberfläche von maximal 80 $m^2/g$ aufweist,
    - eine auf dem Trägermaterial vorliegende iridiumhaltige Beschichtung, die ein Iridiumoxid, ein Iridiumhydroxid oder ein Iridiumhydroxidoxid oder ein Gemisch aus mindestens zwei dieser Iridiumverbindungen enthält,

  - wobei der Katalysator Iridium in einer Menge von maximal 60 Gew% enthält und
  - die auf der Membranvorderseite vorliegende katalysatorhaltige Beschichtung eine Iridium-Beladung von maximal 0,4 mg Iridium / $cm^2$ aufweist.

Durch die oben genannten Eigenschaften des Katalysators (d.h. BET-Oberfläche des Trägermaterials von maximal 80 $m^2$/g und Iridiumgehalt von maximal 60 Gew%) in Kombination mit einer sehr geringen Iridium-Beladung (maximal 0,4 mg Iridium pro $cm^2$ Membran) der auf der Membranvorderseite vorliegenden katalysatorhaltigen Beschichtung fungiert diese Beschichtung bei der Wasserelektrolyse als sehr effiziente Anode, die eine hohe Aktivität bei niedrigem Iridiumgehalt aufweist.

Die auf der Membranvorderseite vorliegende katalysatorhaltige Beschichtung wird nachfolgend auch als Membran-Beschichtung bezeichnet, während die auf dem Trägermaterial vorliegende iridiumhaltige Beschichtung nachfolgend auch als Trägermaterial-Beschichtung bezeichnet wird.

Wie dem Fachmann bekannt ist, ergibt sich der Wert für die Iridium-Beladung der Membran-Beschichtung, indem die Masse (in [mg]) des in der Membran-Beschichtung vorliegenden Iridiums dividiert wird durch die Fläche (in $[cm^2]$) der Membran, die mit der Membran-Beschichtung bedeckt ist.

Bevorzugt weist die Membran-Beschichtung eine Iridium-Beladung von maximal 0,3 mg Iridium/$cm^2$, bevorzugter weniger als 0,20 mg Iridium/$cm^2$ auf. Beispielsweise liegt die Iridium-Beladung der Membran-Beschichtung im Bereich von 0,01 bis 0,4 mg Iridium / $cm^2$, bevorzugter 0,02 bis 0,3 mg Iridium / $cm^2$, noch bevorzugter 0,03 bis <0,20 mg Iridium / $cm^2$.

Die Membran-Beschichtung weist beispielsweise eine Dicke im Bereich von 2 $\mu$m bis 10 $\mu$m, bevorzugter 3 $\mu$m bis 8 $\mu$m, noch bevorzugter 3 $\mu$m bis 7 $\mu$m auf.

Bevorzugt enthält die Membran-Beschichtung (und damit auch der Katalysator) kein metallisches Iridium (d.h. Iridium in der Oxidationsstufe 0). Bevorzugt liegt das Iridium in der Membran-Beschichtung ausschließlich als Iridium in der Oxidationsstufe +3 (Iridium(III)) und/oder als Iridium in der Oxidationsstufe +4 (Iridium(IV)) vor. Die Oxidationsstufe des Iridiums und somit die Abwesenheit von Iridium(0) und die Anwesenheit von Iridium(III) und/oder Iridium(IV) lässt sich durch XPS (Röntgenphotoelektronenspektroskopie) verifizieren. Weiterhin ist bevorzugt, dass das Iridium der Membran-Beschichtung ausschließlich als iridiumhaltige Beschichtung auf dem Trägermaterial vorliegt.

Bevorzugt enthält der Katalysator Iridium in einer Menge von maximal 40 Gew%, bevorzugter maximal 35 Gew%. Beispielsweise enthält der Katalysator Iridium in einer Menge von 5 Gew% bis 60 Gew%, bevorzugter 5 Gew% bis 40 Gew%, noch bevorzugter 5 Gew% bis 35 Gew%.

Üblicherweise ist das Trägermaterial und damit auch der Katalysator partikelförmig.

Bevorzugt weist das Trägermaterial eine BET-Oberfläche von maximal 65 $m^2$/g, bevorzugter maximal 50 $m^2$/g auf. Beispielsweise liegt die BET-Oberfläche des Trägermaterials im Bereich von 2-80 $m^2$/g, bevorzugter 2-65 $m^2$/g, noch bevorzugter 2-50 $m^2$/g. In einer bevorzugten Ausführungsform beträgt die BET-Oberfläche des Trägermaterials 2 $m^2$/g bis 40 $m^2$/g, bevorzugter 2 $m^2$/g bis < 10 $m^2$/g, noch bevorzugter 2 $m^2$/g bis 9 $m^2$/g.

Für die Effizienz des Katalysators hinsichtlich der Sauerstoffentwicklungsreaktion kann es vorteilhaft sein, wenn die auf dem partikelförmigen Trägermaterial vorliegende iridiumhaltige Beschichtung eine durchschnittliche Schichtdicke im Bereich von 1,0 nm bis 5,0 nm, bevorzugter 1,5 nm bis 4,0 nm, noch bevorzugter 1,7 nm bis 3,5 nm aufweist. Die Schichtdicke kann durch die Menge an Iridiumoxid, Iridiumhydroxid oder Iridiumhydroxidoxid, die auf dem Trägermaterial abgeschieden wird, und die BET-Oberfläche des Trägermaterials eingestellt werden. Je höher die BET-Oberfläche des Trägermaterials bei einer bestimmten Menge an aufgebrachtem Iridiumoxid, Iridiumhydroxid oder Iridiumhydroxidoxid ist, desto geringer wird die Schichtdicke der iridiumhaltigen Trägermaterial-Beschichtung. Die durchschnittliche Dicke der auf dem Trägermaterial vorliegenden iridiumhaltigen Beschichtung wird durch Transmissionselektronenmikroskopie (TEM) bestimmt. Bevorzugt weist die iridiumhaltige Beschichtung auf dem Trägermaterial eine relativ gleichmäßige Schichtdicke auf. Beispielsweise variiert die durchschnittliche Schichtdicke lokal um einen Faktor von maximal 2. Bevorzugt beträgt die relative Standardabweichung von der durchschnittlichen Schichtdicke maximal 35%. Wie allgemein bekannt ist, ergibt sich die relative Standardabweichung StAbw$_{rel}$ (in %), manchmal auch als Variationskoeffizient bezeichnet, aus folgender Beziehung:

$$\text{StAbw}_{rel} = [\text{StAbw} / \text{MW}] \times 100$$

wobei

MW der Mittelwert der gemessenen Größe, vorliegend also die durchschnittliche Schichtdicke in nm, und StAbw die Standardabweichung, in nm, von der durchschnittlichen Schichtdicke sind.

Bevorzugt weist der Katalysator eine Kern-Schale-Struktur auf, in der das Trägermaterial den Kern und die iridiumhaltige Beschichtung die Schale bilden. Bevorzugt ist der Kern vollständig von der Schale umschlossen.

In einer beispielhaften Ausführungsform weist das Trägermaterial eine BET-Oberfläche im Bereich von 2-65 $m^2$/g auf, der Katalysator enthält 5 Gew% bis 40 Gew% Iridium und der Iridium-Beladungsgrad der auf der Membran vorliegenden katalysatorhaltigen Beschichtung beträgt 0,02 bis 0,3 mg Iridium / $cm^2$. Die durchschnittliche Dicke der iridiumhaltigen Trägermaterial-Beschichtung liegt in dieser bevorzugten Ausführungsform beispielsweise im Bereich von 1,5 nm bis 4,0 nm, bevorzugter 1,7 nm bis 3,5 nm.

In einer weiteren beispielhaften Ausführungsform weist das Trägermaterial eine BET-Oberfläche im Bereich von 2-35 $m^2$/g auf, der Katalysator enthält 5 Gew% bis 35 Gew% Iridium und der Iridium-Beladungsgrad der auf der Membran vorliegenden katalysatorhaltigen Beschichtung beträgt 0,03 bis <0,20 mg Iridium / $cm^2$. Die Dicke der iridiumhaltigen Trägermaterial-Beschichtung liegt in dieser bevorzugten Ausführungsform beispielsweise im Bereich von 1,5 nm bis 4,0 nm, bevorzugter 1,7 nm bis 3,5 nm.

In einer weiteren beispielhaften Ausführungsform weist das Trägermaterial eine BET-Oberfläche im Bereich von 2 $m^2$/g bis <10 $m^2$/g, bevorzugter 2 $m^2$/g bis 9 $m^2$/g auf, der Katalysator enthält 5 Gew% bis 20 Gew%, bevorzugter 5 Gew% bis 14 Gew% Iridium und der Iridium-Beladungsgrad der auf der Membran vorliegenden katalysatorhaltigen Beschichtung beträgt 0,03 bis <0,20 mg Iridium / $cm^2$. Die Dicke der iridiumhaltigen Trägermaterial-Beschichtung liegt in dieser bevorzugten Ausführungsform beispielsweise im Bereich von 1,5 nm bis 4,0 nm, bevorzugter 1,7 nm bis 3,5 nm.

Für die Effizienz des Katalysators hinsichtlich der Sauerstoffentwicklungsreaktion kann es vorteilhaft sein, wenn der Iridiumgehalt des Katalysators der folgenden Bedingung genügt:

$$(1{,}003\ (g/m^2) \times BET) / (1 + 0{,}0117\ (g/m^2) \times BET) \leq Ir\text{-}G \leq (5{,}015\ (g/m^2) \times BET) / (1 + 0{,}0585\ (g/m^2) \times BET)$$

wobei

BET die BET-Oberfläche, in $m^2$/g, des Trägermaterials ist und
Ir-G der Iridiumgehalt, in Gew%, des Katalysators ist.

Wird beispielsweise ein Trägermaterial mit einer BET-Oberfläche von 10 $m^2$/g verwendet, ergibt sich anhand der oben genannten Bedingung, dass für den Katalysator ein Iridiumgehalt im Bereich von 9-32 Gew% zu wählen ist.

In einer bevorzugten Ausführungsform genügt der Iridiumgehalt des Katalysators der folgenden Bedingung:

$$(1{,}705\ (g/m^2) \times BET) / (1 + 0{,}0199\ (g/m^2) \times BET) \leq Ir\text{-}G \leq (3{,}511\ (g/m^2) \times BET) / (1 + 0{,}0410\ (g/m^2) \times BET)$$

wobei

BET die BET-Oberfläche in $m^2$/g des Trägermaterials ist und
Ir-G der Iridiumgehalt in Gew% des Katalysators ist.

Noch bevorzugter genügt der Iridiumgehalt des Katalysators der folgenden Bedingung:

$$(1{,}805\ (g/m^2) \times BET) / (1 + 0{,}0211\ (g/m^2) \times BET) \leq Ir\text{-}G \leq (3{,}009\ (g/m^2) \times BET) / (1 + 0{,}0351\ (g/m^2) \times BET)$$

wobei

BET die BET-Oberfläche in $m^2$/g des Trägermaterials ist und
Ir-G der Iridiumgehalt in Gew% des Katalysators ist.

Bevorzugt enthält die auf dem Trägermaterial vorliegende iridiumhaltige Beschichtung ein Iridiumhydroxidoxid. Ein Iridiumhydroxidoxid enthält neben Oxid-Anionen auch noch Hydroxid-Anionen und lässt sich beispielsweise durch folgende Formel wiedergeben: $IrO(OH)x$; $1 \leq x < 2$.

Beispielsweise liegt in der auf dem Trägermaterial vorliegenden iridiumhaltigen Beschichtung ein atomares Verhältnis von Iridium(IV) zu Iridium (III), bestimmt über Röntgenphotoelektronenspektroskopie (XPS), von maximal 4,7/1,0 vor. Beispielsweise liegt das atomare Iridium(IV)/Iridium(III)-Verhältnis in der iridiumhaltigen Schicht auf dem Trägermaterial im Bereich von 1,0/1,0 bis 4,7/1,0. Dies kann zu einer weiteren Verbesserung der elektrochemischen Aktivität des Katalysators führen. Um einen vorteilhaften Kompromiss zwischen hoher elektrochemischer Aktivität und hoher elektrischer Leitfähigkeit zu realisieren, kann es bevorzugt sein, dass das atomare Iridium(IV)/Iridium(III)-Verhältnis in der auf dem Trägermaterial vorliegenden iridiumhaltigen Schicht im Bereich von 1,9/1,0 bis 4,7/1,0, bevorzugter 2,5/1,0 bis 4,7/1,0 liegt. Das atomare Iridium(IV)/Iridium(III)-Verhältnis kann über die Temperatur einer thermischen Behandlung des Katalysators eingestellt werden. Eine thermische Behandlung des Katalysators bei hoher Temperatur begünstigt hohe Werte für das Iridium(IV)/Iridium(III)-Verhältnis. Bevorzugte Temperaturen für eine thermische Behandlung des Katalysators werden nachfolgend noch angegeben.

Ein vorteilhafter Kompromiss zwischen ausreichend hoher elektrischer Leitfähigkeit und hoher elektrochemischer Aktivität des Katalysators kann beispielsweise erzielt werden, wenn der Katalysator während seiner Herstellung einer thermischen Behandlung bei einer Temperatur von mehr als 250°C, z.B. >250°C bis 550°C, bevorzugter 300°C bis 450°C, noch bevorzugter 300°C bis 380°C unterzogen wurde. Die thermische Behandlung kann beispielsweise in einer sauerstoffhaltigen Atmosphäre erfolgen. Die thermische Behandlung erfolgt beispielsweise über einen Zeitraum von mindestens einer Stunde, bevorzugt aber nicht mehr als drei Stunden. Durch diese thermische Behandlung (bevorzugt bei 300-450°C, noch bevorzugter bei 300-380°C) kann die elektrische Leitfähigkeit des Katalysators im Vergleich zu einem nicht thermisch behandelten Katalysator deutlich erhöht werden (beispielsweise um das 50- bis 100-fache), während die elektrochemische Aktivität nur moderat reduziert wird (z.B. um das 1,5- bis 2-fache).

Bevorzugt enthält der Katalysator kein metallisches Edelmetall (wie z.B. Platin, Palladium, Iridium, Rhodium, Ruthenium, Osmium, Silber oder Gold). Mit metallischem Edelmetall ist ein Edelmetall der Oxidationsstufe 0 gemeint. Die Abwesenheit metallischer Edelmetalle kann durch XPS verifiziert werden.

Optional kann die auf dem Trägermaterial vorliegende iridiumhaltige Beschichtung noch Ruthenium in der Oxidationsstufe +3 (Ru(III)) und/oder der Oxidationsstufe +4 (Ru(IV)) enthalten.

Geeignete Trägermaterialien, auf denen die iridiumhaltige Beschichtung aufgebracht werden kann, sind dem Fachmann bekannt. Beispielsweise ist das Trägermaterial ein Oxid eines Übergangsmetalls (beispielsweise ein Titanoxid (z.B. $TiO_2$), ein Zirkonoxid (z.B. $ZrO_2$), ein Nioboxid (z.B. $Nb_2O_5$), ein Tantaloxid (z.B. $Ta_2O_5$) oder ein Ceroxid), ein Oxid eines Hauptgruppenmetalls (z.B. ein Aluminiumoxid wie $Al_2O_3$), $SiO_2$ oder ein Gemisch aus zwei oder mehr der vorstehend genannten Trägermaterialien. In einer bevorzugten Ausführungsform ist das Trägermaterial ein Titanoxid.

Die Herstellung des Katalysators erfolgt bevorzugt über ein nasschemisches Verfahren, bei dem unter alkalischen Bedingungen und optional durch eine thermische Nachbehandlung ein Iridiumoxid, Iridiumhydroxid oder Iridiumhydroxidoxid auf einem partikelförmigen Trägermaterial aufgebracht wird.

Alternativ ist es auch möglich, die iridiumhaltige Beschichtung über eine Spraypyrolyse auf dem Trägermaterial abzuscheiden.

Beispielsweise erfolgt die Herstellung des Katalysators durch ein Verfahren, in dem

- in einem wässrigen Medium, das eine Iridiumverbindung enthält, bei einem pH-Wert $\geq$ 9 ein Iridium-haltiger Feststoff auf einem Trägermaterial abgeschieden wird,
- das mit dem Iridium-haltigen Feststoff beladene Trägermaterial aus dem wässrigen Medium abgetrennt und optional einer thermischen Behandlung unterzogen wird.

Das zu beschichtende Trägermaterial liegt dispergiert in dem wässrigen Medium vor. Das wässrige Medium enthält eine Iridiumverbindung, die sich unter alkalischen Bedingungen als Iridium-haltiger Feststoff ausfällen lässt. Solche Iridiumverbindungen sind dem Fachmann bekannt. Bevorzugt handelt es sich um eine Iridium(IV)- oder eine Iridium(III)-Verbindung.

Wie oben bereits erwähnt, kann die Schichtdicke der Trägermaterial-Beschichtung durch die Menge an Iridiumoxid, Iridiumhydroxid oder Iridiumhydroxidoxid, die auf dem Trägermaterial abgeschieden wird, und die BET-Oberfläche des Trägermaterials eingestellt werden. Je höher die BET-Oberfläche des Trägermaterials bei einer bestimmten Menge an aufgebrachtem Iridiumoxid, Iridiumhydroxid oder Iridiumhydroxidoxid ist, desto geringer wird die Schichtdicke der iridiumhaltigen Beschichtung auf dem Trägermaterial.

Geeignete Iridium(III)- oder Iridium(IV)-Verbindungen, die unter alkalischen Bedingungen in wässriger Lösung als Feststoff ausfallen, sind dem Fachmann bekannt. Beispielsweise ist die Iridium(III)- oder Iridium(IV)-Verbindung ein Salz (z.B. ein Iridiumhalogenid wie $IrCl_3$ oder $IrCl_4$; ein Salz, dessen Anion ein Chloro-Komplex $IrCl_6^{2-}$ ist; ein Iridiumnitrat oder ein Iridiumacetat) oder eine Iridium-haltige Säure wie z.B. $H_2IrCl_6$. In einer bevorzugten Ausführungsform enthält das wässrige Medium ein Iridium(IV)-halogenid, insbesondere Ir(IV)-chlorid.

Optional kann in dem wässrigen Medium auch noch eine Ruthenium(III)- und/oder Ruthenium(IV)-Verbindung vorliegen. Dies ermöglicht die Abscheidung eines Iridium-Ruthenium-Hydroxidoxids auf dem Trägermaterial. Sofern eine Ruthenium-Precursorverbindung im wässrigen Medium vorliegt, kann es sich beispielsweise um ein Ru(III)-oder Ru(IV)-Salz handeln, z.B. ein Halogenid-, Nitrat- oder Acetat-Salz.

Bevorzugt weist das wässrige Medium für die Abscheidung des Iridium-haltigen Feststoffs auf dem Trägermaterial einen pH-Wert $\geq$10, noch bevorzugter $\geq$11 auf. Beispielsweise weist das wässrige Medium einen pH-Wert von 9-14, bevorzugter 10-14 oder 11-14 auf.

Das wässrige Medium enthält üblicherweise Wasser in einem Anteil von mindestens 50 Vol%, bevorzugter mindestens 70 Vol% oder sogar mindestens 90 Vol%.

Für die Abscheidung des Iridium-haltigen Feststoffs auf dem Trägermaterial beträgt die Temperatur des wässrigen Mediums beispielsweise 40 °C bis 100 °C, bevorzugter 60 °C bis 80 °C.

Das Trägermaterial kann beispielsweise in einem wässrigen Medium, das bereits eine oder mehrere Iridium(III)- und/oder Iridium(IV)-Verbindungen enthält, jedoch einen pH-Wert < 9 aufweist, dispergiert werden (z.B. bei Raumtemperatur). Anschließend wird der pH-Wert des wässrigen Mediums durch Zugabe einer Base auf einen Wert ≥ 9 erhöht und optional wird auch die Temperatur des wässrigen Mediums erhöht, bis sich über eine Ausfällungsreaktion ein Iridiumhaltiger Feststoff auf dem Trägermaterial abscheidet. Alternativ ist es beispielsweise auch möglich, das Trägermaterial in einem wässrigen Medium, das noch keine Iridiumverbindungen enthält, zu dispergieren und erst nach der Einstellung eines geeigneten pH-Werts und optional einer bestimmten Fällungstemperatur eine Iridium(III)- und/oder Iridium(IV)-Verbindung dem wässrigen Medium zuzugeben.

Sofern in dem wässrigen Medium auch noch eine Ruthenium(III)- und/oder Ruthenium(IV)-Verbindung vorlag, enthält der durch die Fällung auf das Trägermaterial aufgebrachte Feststoff neben Iridium noch Ruthenium. Das atomare Verhältnis von Iridium zu Ruthenium kann beispielsweise im Bereich von 90/10 bis 10/90 liegen.

Die Abtrennung des mit dem Iridium-haltigen Feststoff beladenen Trägermaterials aus dem wässrigen Medium erfolgt über Methoden, die dem Fachmann bekannt sind (z.B. durch Filtration).

Das mit dem Iridium-haltigen Feststoff beladene Trägermaterial wird getrocknet. Der getrocknete Iridium-haltige Feststoff, der auf dem Trägermaterial vorliegt, ist beispielsweise ein Iridiumhydroxidoxid. Ein Iridiumhydroxidoxid enthält neben Oxid-Anionen auch noch Hydroxid-Anionen und lässt sich beispielsweise durch folgende Formel wiedergeben: $IrO(OH)x$; $1 \leq x < 2$.

Wie oben bereits erläutert, kann die elektrische Leitfähigkeit der auf dem Trägermaterial vorliegenden iridiumhaltigen Beschichtung und damit des Katalysators verbessert werden, wenn eine thermische Nachbehandlung bei etwas höherer Temperatur erfolgt. Ein vorteilhafter Kompromiss zwischen ausreichend hoher elektrischer Leitfähigkeit und hoher elektrochemischer Aktivität des Katalysators kann beispielsweise erzielt werden, wenn das beschichtete Trägermaterial einer thermischen Behandlung bei einer Temperatur von mehr als 250°C, z.B. >250°C bis 550°C, bevorzugter 300°C bis 450°C, noch bevorzugter 300°C bis 380°C unterzogen wird. Die thermische Behandlung kann beispielsweise in einer sauerstoffhaltigen Atmosphäre erfolgen. Die thermische Behandlung erfolgt beispielsweise über einen Zeitraum von mindestens einer Stunde, bevorzugt jedoch nicht mehr als drei Stunden.

Bevorzugt enthält die auf der Membran vorliegende Beschichtung neben dem Katalysator noch ein Ionomer. Geeignete Ionomere sind dem Fachmann bekannt. Beispielsweise ist das Ionomer ein Polymer, das Sulfonsäuregruppehaltige Monomere enthält; insbesondere ein Copolymer, das als Monomere ein Tetrafluorethylen und einen Sulfonsäuregruppe-haltigen Fluorvinylether enthält. Die auf der Membran vorliegende Beschichtung enthält das Ionomer beispielsweise in einer Menge von 2 Gew% bis 20 Gew%.

Geeignete Membrane, die für die PEM-Wasserelektrolyse verwendet werden können, sind dem Fachmann bekannt. Beispielsweise enthält die Membran ein Polymer, das Sulfonsäuregruppe-haltige Monomere enthält; insbesondere ein Copolymer, das als Monomere ein Tetrafluorethylen und einen Sulfonsäuregruppe-haltigen Fluorvinylether enthält. Eine Übersicht geeigneter Polymere für die Membran findet sich z.B. in folgender Publikation: A. Kusoglu und A.Z. Weber in Chem. Rev., 2017, 117, S. 987-1104.

Die katalysatorhaltige Membran-Beschichtung kann über übliche, dem Fachmann bekannte Verfahren auf die Membran aufgebracht werden. Beispielsweise kann eine Tinte, die die Katalysatorzusammensetzung und optional ein Ionomer enthält, direkt auf die Membran aufgebracht werden, so dass nach entsprechender Trocknung die beschichtete Membran erhalten wird. Alternativ kann in einem sogenannten Decal-Verfahren die katalysatorhaltige Beschichtung zunächst auf eine Träger- oder Decalfolie aufgebracht und anschließend durch Druck und ausreichend hohe Temperatur von der Decal-Folie auf die Membran übertragen werden.

Wird die oben beschriebene beschichtete Membran als Membran-Elektroden-Einheit in einer Wasserelektrolysezelle eingesetzt, so fungiert die oben beschriebene katalysatorhaltige Beschichtung auf der Vorderseite der Membran als Anode, an der die Sauerstoffentwicklungsreaktion stattfindet.

Auf der Rückseite der Membran kann eine Beschichtung aufgebracht sein, die einen Katalysator für die Wasserstoffentwicklungsreaktion ("hydrogen evolution reaction"; HER-Katalysator) enthält. Geeignete HER-Katalysatoren (beispielsweise ein Katalysator, der ein Trägermaterial und ein darauf aufgebrachtes Edelmetall enthält) sind dem Fachmann bekannt.

Weiterhin betrifft die vorliegende Erfindung eine Wasserelektrolysezelle, enthaltend die oben beschriebene beschichtete Membran.

Messmethoden

Folgende Messmethoden wurden im Rahmen der vorliegenden Erfindung verwendet:

Durchschnittliche Dicke der iridiumhaltigen Trägermaterial-Beschichtung

Die durchschnittliche Dicke der iridiumhaltigen Beschichtung auf dem Trägermaterial wurde durch TEM (Transmissionselektronenmikroskopie) bestimmt. Die durchschnittliche Dicke ergibt sich aus dem arithmetischen Mittelwert der an mindestens zehn verschiedenen Stellen auf mindestens zwei TEM-Aufnahmen bestimmten Schichtdicken der iridiumhaltigen Beschichtung.

Es wurden wenige μg des zu untersuchenden Materials in Ethanol suspendiert. Anschließend wurde ein Tropfen der Suspension auf ein Kohle-Lochfilm-beschichtetes Cu-Plättchen (Plano, 200 mesh) pipettiert und getrocknet. Die Schichtdickenmessungen wurden bei einer Vergrößerung von 500.000x gemacht. Durch eine parallele EDX-Elementanalyse von einem im Trägermaterial vorliegenden Element (z.B. Ti) und von Ir ist auf der TEM-Aufnahme ersichtlich, welche Bereiche auf den Trägermaterialpartikeln iridiumhaltig sind.

Es wurde auf mindestens zwei TEM-Aufnahmen jeweils an mindestens 5 Stellen der TEM-Aufnahme die Dicke der iridiumhaltigen Beschichtung bestimmt. Jede TEM-Aufnahme zeigt mehrere Partikel. Der arithmetische Mittelwert dieser Schichtdicken ergab die durchschnittliche Dicke der iridiumhaltigen Beschichtung.

Die relative Standardabweichung $StAbw_{rel}$ (in %), manchmal auch als Variationskoeffizient bezeichnet, von der durchschnittlichen Schichtdicke ergibt sich in bekannter Weise aus folgender Beziehung:

$$StAbw_{rel} = [StAbw / MW] \times 100$$

wobei

MW die durchschnittliche Schichtdicke, in nm, ist und
StAbw die Standardabweichung, in nm, von der durchschnittlichen Schichtdicke ist.

Die (absolute) Standardabweichung, in nm, ergibt sich in bekannter Weise über die Quadratwurzel der Varianz.

Iridiumgehalt

Der Iridiumgehalt und, sofern anwesend, der Gehalt an Ruthenium werden über optische Emissionsspektrometrie mit induktiv gekoppeltem Plasma (ICP-OES) bestimmt.

BET-Oberfläche

Die BET-Oberfläche wurde mit Stickstoff als Adsorbat bei 77 K gemäß der BET-Theorie bestimmt (Mehrpunkt-Methode, ISO 9277:2010).

Atomares Verhältnis von Ir(IV) zu Ir(III)

Die relativen Anteile der Ir-Atome der Oxidationsstufe +4 und der Oxidationsstufe +3 und damit das atomare Ir(IV)/Ir(III)-Verhältnis in dem geträgerten Iridiumhydroxidoxid wurden durch Röntgenphotoelektronenspektroskopie (XPS) bestimmt. Die Bestimmung dieses Verhältnis wird im Detailspektrum des Ir(4f) Dubletts (BE 75 - 55 eV, Al-kα Quelle) durch einen asymmetrischen Peakfit - Shirley Background, Gauss-Lorentz Mischung mit 30 % Gauss-Anteil und einem Tailoringfaktor von 0.7 - durchgeführt. Darüber hinaus wird das Vorhandensein einer IrOH-Spezies im O(1s) Detailspektrum (BE ca. 531 eV, Al-kα Quelle) ebenfalls mittels eines asymmetrischen Peakfits (Shirley Background, Gauss-Lorentz Mischung mit 30 % Gauss-Anteil) nachgewiesen. Eine entsprechende Vorgehensweise wird z.B. in Abbott et al., Chem. Mater, 2016, 6591-6604, beschrieben.

Über XPS-Analyse kann auch geprüft werden, ob Iridium(0) in der Zusammensetzung vorliegt.

Dicke der katalysatorhaltigen Membran-Beschichtung

Die Dicke der katalysatorhaltigen Membran-Beschichtung wird durch Untersuchung eines Querschnitts einer katalysatorbeschichteten Membran mittels eines Rasterlektronenmikroskops bestimmt. Die REM Analyse wurde bei einer Beschleunigungsspannung von 5 bis 15 kV durchgeführt.

Anhand der nachfolgenden Beispiele wird die Erfindung eingehender erläutert.

**Beispiele**

Herstellung der Katalysatoren

Erfindungsgemäßes Beispiel EB1

124,56 g Iridium(IV)-chlorid (IrCl$_4$ Hydrat, Heraeus Deutschland GmbH & Co. KG) wurden in 4000 mL Wasser bei Raumtemperatur gelöst. Anschließend wurden 60,17 g TiO$_2$ (P25, Evonik, BET-Oberfläche: 60 m$^2$/g) hinzugefügt. Durch Zugabe von NaOH wurde der pH auf 9,7 eingestellt. Das wässrige Medium wurde auf 70 °C erwärmt und der pH wurde auf 11 eingestellt. Es wurde über Nacht bei 70 °C gerührt. Der pH wurde auf 11 gehalten. Das mit dem Iridium-haltigen Feststoff beladene TiO$_2$-Trägermaterial wurde abfiltriert, gewaschen und getrocknet. Es wurde eine einstündige thermische Nachbehandlung bei 350°C in einer sauerstoffhaltigen Atmosphäre durchgeführt. Die XPS-Analyse zeigte, dass der auf dem Träger vorliegende getrocknete Iridium-haltige Feststoff ein Iridiumhydroxidoxid ist.

Erfindungsgemäßes Beispiel EB2

27,80 g Iridium(IV)-chlorid (IrCl$_4$ Hydrat, Heraeus Deutschland GmbH & Co. KG) wurden in 4000 mL Wasser bei Raumtemperatur gelöst. Anschließend wurden 29,94 g TiO$_2$ (DT20, Tronox, BET-Oberfläche: 20 m$^2$/g) hinzugefügt. Durch Zugabe von NaOH wurde der pH auf 10,3 eingestellt. Das wässrige Medium wurde auf 70°C erwärmt und der pH wurde wieder auf 11 eingestellt. Es wurde über Nacht bei 70°C gerührt. Der pH wurde auf > 11,0 gehalten. Das mit dem Iridium-haltigen Feststoff beladene TiO$_2$-Trägermaterial wurde abfiltriert, gewaschen und getrocknet. Es wurde eine einstündige thermische Nachbehandlung bei 350°C in einer sauerstoffhaltigen Atmosphäre durchgeführt. Die XPS-Analyse zeigte, dass der auf dem Träger vorliegende getrocknete Iridium-haltige Feststoff ein Iridiumhydroxidoxid ist.

Vergleichsbeispiel VB1

Es wurde ein kommerziell erhältlicher Katalysator verwendet. Dieser Katalysator enthält als Trägermaterial TiO$_2$, das mit IrO$_2$ beschichtet ist.

Vergleichsbeispiel VB2

48,35 g Iridium(IV)-chlorid (IrCl$_4$ Hydrat, Heraeus Deutschland GmbH & Co. KG) wurden in 4000 mL Wasser bei Raumtemperatur gelöst. Anschließend wurden 51,9 g TiO$_2$ (Activ G5, Tronox, BET-Oberfläche: 150 m$^2$/g) hinzugefügt. Durch Zugabe von NaOH wurde der pH auf 11,2 eingestellt. Das wässrige Medium wurde auf 70°C erwärmt und der pH wurde auf > 9,0 eingestellt. Es wurde über Nacht bei 70°C gerührt. Der pH wurde auf > 9,0 gehalten. Das mit dem Iridium-haltigen Feststoff beladene TiO$_2$-Trägermaterial wurde abfiltriert, gewaschen und getrocknet. Es wurde eine einstündige thermische Nachbehandlung bei 350°C in einer sauerstoffhaltigen Atmosphäre durchgeführt. Die XPS-Analyse zeigte, dass der auf dem Träger vorliegende getrocknete Iridium-haltige Feststoff ein Iridiumhydroxidoxid ist.

Der Iridiumgehalt der Katalysatoren und die BET-Oberflächen der Trägermaterialien sind in der nachfolgenden Tabelle 1 zusammengefasst.

Tabelle 1: Iridiumgehalt der Katalysatoren und BET-Oberflächen der Trägermaterialien

| Beispiel | Iridiumgehalt der Zusammensetzung [Gew%] | BET-Oberfläche des Trägermaterials [m$^2$/g] |
|---|---|---|
| EB1 | 45 | 60 |
| EB2 | 30 | 20 |
| VB1 | 75 | n.a. |
| VB2 | 30 | 150 |

Herstellung beschichteter Membrane und Bestimmung der Aktivität

Jeder der Katalysatoren der Beispiele EB1, EB2, VB1 und VB2 wurde zusammen mit einem fluorierten Ionomer in einer flüssigen Phase dispergiert. In allen hergestellten Dispersionen wurde dasselbe Ionomer und dasselbe Lösungsmittel verwendet.

Die Dispersionen wurden jeweils auf eine Transferfolie (Decalfolie) aufgebracht. Nach einem Trocknen von 5 Minuten bei 110°C wurde das Material von der Transferfolie auf eine Membran (Nafion® NR212, Chemours, USA) übertragen. Der Transfer erfolgte bei einer Temperatur von 170°C und einem Druck von 1,5 MPa (Dauer: 1 Minute). Das auf die Membran transferierte Material, das einen der Katalysatoren der Beispiele EB1, EB2, VB1 und VB2 enthielt, fungierte als Anode.

Auf der Membran wurde über das Decalverfahren außerdem eine Kathode aufgebracht. Die Kathode war in allen Beispielen identisch und enthielt ein auf einem Kohlenstoff getragenes Platin und ein fluoriertes Ionomer.

Anode, Membran und Kathode bilden zusammen die Membran-Elektroden-Einheit ("*Catalyst-Coated Membrane*" CCM). In den Beispielen EB1, EB2, VB1 und VB2 unterscheiden sich diese Membran-Elektroden-Einheiten nur durch ihre Anoden.

In einer ersten Versuchsreihe wurde der Wirkungsgrad einer CCM in einer Einzelzelle mit einer aktiven Fläche von 25 cm$^2$ gemessen. Die Zelle bestand aus platinierten Titanplatten mit einem stollenprofilartigen Flussfeld ("column bar flow field" Design) auf der Anoden- und Kathodenseite. Als poröse Transportschicht auf der Anodenseite wurde jeweils ein unbeschichteter Titansinter (1 mm Dicke) verwendet. In dieser Versuchsreihe wurden die Katalysatoren EB2 und VB2 verwendet.

In einer zweiten Versuchsreihe wurde der Wirkungsgrad einer CCM in einer Einzelzelle mit einer aktiven Fläche von 5 cm$^2$ gemessen. Die Zelle bestand aus vergoldeten Titanplatten mit einem serpentinenartigen Flussfeld ("single serpentine flow field" Design) auf der Anoden- und Kathodenseite. Als poröse Transportschicht wurde auf der Anodenseite jeweils ein goldbeschichteter Titansinter (EB1, EB2, VB1) verwendet. In dieser Versuchsreihe wurden die Katalysatoren EB1, EB2 und VB1 verwendet.

Als Gasdiffusionslage wurde in allen Versuchsreihen auf der Kathodenseite ein Kohlenstoffpapier (Toray TGP-H-120) verwendet. De-ionisiertes Wasser mit einer Leitfähigkeit von weniger als 1 $\mu$S/cm wurde auf der Anodenseite zirkuliert. Die Zelle wurde innerhalb von 20 min von Raumtemperatur auf 60 °C erwärmt. Anschließend wurde die Temperatur innerhalb von 20 min auf 80 °C erhöht.

In der ersten Versuchsreihe erfolgte die Konditionierung durch Halten einer Stromdichte von 1 A/cm$^2$ für eine 1 Stunde und anschließendes zehnfaches Zyklen zwischen 0 und 1 A/cm$^2$ mit einer Haltezeit von 5 min für jeden Schritt. Zum Abschluss der Konditionierung wurde die Zelle für 10 min bei 1 A/cm$^2$ gehalten. Strom-Spannungs-Kennlinien (Polarisationskurven) wurden bei 80°C, 65°C und 50°C aufgenommen, indem die Stromdichte von kleinen zu großen Werten (A/cm$^2$) mit einer Haltezeit von jeweils 10 min erhöht wurde. Die Schritte waren im Einzelnen:
0,01 - 0,02 - 0,03 - 0,05 - 0,08 - 0,1 - 0,2 - 0,4 - 0,6 - 0,8 - 1,0 - 1,2 - 1,4 - 1,6 - 1,8 - 2,0 - 2,25 - 2,5 - 2,75 - 3,0. (jeweils A/cm$^2$)

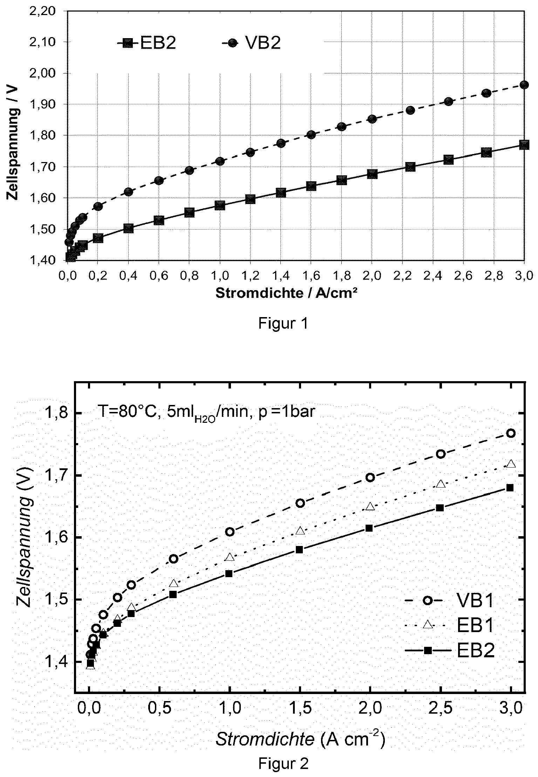

In der zweiten Versuchsreihe erfolgte die Konditionierung durch Halten einer Stromdichte von 1 A/cm$^2$ für 30 Minuten. Strom-Spannungs-Kennlinien (Polarisationskurven) wurden bei 80°C aufgenommen, indem die Stromdichte von kleinen zu großen Werten (A/cm$^2$) mit einer Haltezeit von jeweils 5 min erhöht wurde. Die Schritte waren im Einzelnen:
0,01 - 0,02 - 0,03 - 0,05 - 0,1 - 0,2 - 0,3 - 0,6 - 1,0 - 1,5 - 2,0 - 2,5 - 3,0 - 3,5 - 4,0 - 4,5 - 5,0 - 5,5 - 6,0 (jeweils A/cm$^2$). Die ersten beiden Strom-Spannungs-Kennlinien wurden dabei noch als Teil der Konditionierung betrachtet, während jeweils die dritten Strom-Spannungs-Kennlinien als Messkurven in Figur 2 dargestellt sind.

Figur 1 zeigt die Messkurven für die Membran-Elektroden-Einheiten der Beispiele, in denen auf der Anodenseite jeweils ein unbeschichteter Titansinter verwendet wurde.

Schichtdicke der Anode, Iridium-Beladungsgrad der Anode und elektrochemische Aktivitäten der Beispiele, in denen auf der Anodenseite jeweils ein unbeschichteter Titansinter als poröse Transportschicht verwendet wurde, sind in Tabelle 2 zusammengefasst. Der besseren Übersichtlichkeit halber werden in der Tabelle 2 auch nochmals die Eigenschaften des in der Anode vorliegenden Katalysators angegeben (siehe auch obige Tabelle 1).

Tabelle 2: Eigenschaften der beschichteten Membrane (Verwendung eines unbeschichteten Titansinters als poröse Transportschicht)

| Beispiel | Eigenschaften des in der Anode vorliegenden Katalysators | | Schichtdicke der Anode [$\mu$m] | Iridium-Beladungsgrad der Anode [mg Ir / cm$^2$] | Aktivität bei 1.45 V$_{iR-frei}$ [A / g Ir] |
|---|---|---|---|---|---|
| | Iridium-Gehalt des Katalysators [Gew%] | BET-Oberfläche des Trägermaterials [m$^2$/g] | | | |
| EB2 | 30 | 20 | 6,4 | 0,23 | 614 |
| VB2 | 30 | 150 | 5 | 0,18 | 52 |

Figur 2 zeigt die Messkurven für die Membran-Elektroden-Einheiten der Beispiele, in denen auf der Anodenseite jeweils ein goldbeschichteter Titansinter als poröse Transportschicht verwendet wurde.

Schichtdicke der Anode, Iridium-Beladungsgrad der Anode und elektrochemische Aktivitäten der Beispiele, in denen auf der Anodenseite jeweils ein goldbeschichteter Titansinter als poröse Transportschicht verwendet wurde, sind in Tabelle 3 zusammengefasst. Der besseren Übersichtlichkeit halber werden in der Tabelle 3 auch nochmals die Eigenschaften des in der Anode vorliegenden Katalysators angegeben (siehe auch obige Tabelle 1).

Tabelle 3: Eigenschaften der beschichteten Membrane (Verwendung eines goldbeschichteten Titansinters als poröse Transportschicht)

| Beispiel | Eigenschaften des in der Anode vorliegenden Katalysators | | Schichtdicke der Anode [$\mu$m] | Iridium-Beladungsgrad der Anode [mg Ir / cm$^2$] | Aktivität bei 1.45 V$_{iR-frei}$ [A / g Ir] |
|---|---|---|---|---|---|
| | Iridium-Gehalt des Katalysators [Gew%] | BET-Oberfläche des Trägermaterials [m$^2$/g] | | | |
| EB1 | 45 | 60 | 6,5 | 0,3 | 705 |
| EB2 | 30 | 20 | 3,6 | 0,13 | 1940 |
| VB1 | 75 | n.a. | 10 | 2,3 | 30 |

Die Ergebnisse zeigen, dass die erfindungsgemäßen beschichteten Membrane eine sehr hohe Aktivität bei der Sauerstoffentwicklungsreaktion der Wasserelektrolyse zeigen.

**Patentansprüche**

1.   Eine beschichtete Membran, enthaltend

   - eine Membran mit einer Vorder- und einer Rückseite,
   - eine auf der Vorderseite der Membran vorliegende katalysatorhaltige Beschichtung,

     - der Katalysator enthaltend

       - ein Trägermaterial, das eine BET-Oberfläche von maximal 80 m$^2$/g aufweist,
       - eine auf dem Trägermaterial vorliegende iridiumhaltige Beschichtung, die ein Iridiumoxid, ein Iridiumhydroxid oder ein Iridiumhydroxidoxid oder ein Gemisch aus mindestens zwei dieser Iridiumverbindungen enthält,

     - wobei der Katalysator Iridium in einer Menge von maximal 60 Gew% enthält und
     - die auf der Membranvorderseite vorliegende Beschichtung eine Iridium-Beladung von maximal 0,4 mg Iridium/cm$^2$ aufweist.

2.   Die beschichtete Membran nach Anspruch 1, wobei die Iridium-Beladung der auf der Membranvorderseite vorliegenden Beschichtung maximal 0,3 mg Iridium/cm$^2$, bevorzugter < 0,20 mg Iridium/cm$^2$ beträgt.

3.   Die beschichtete Membran nach Anspruch 1 oder 2, wobei der Katalysator das Iridium in einer Menge von maximal 40 Gew%, bevorzugter maximal 35 Gew% enthält.

4.   Die beschichtete Membran nach einem der vorstehenden Ansprüche, wobei das Trägermaterial eine BET-Oberfläche von maximal 65 m$^2$/g, bevorzugter maximal 50 m$^2$/g, noch bevorzugter im Bereich von 2 m$^2$/g bis 40 m$^2$/g aufweist.

5.   Die beschichtete Membran nach einem der vorstehenden Ansprüche, wobei die auf dem Trägermaterial vorliegende iridiumhaltigen Beschichtung eine durchschnittliche Schichtdicke im Bereich von 1,0 nm bis 5,0 nm, bevorzugter 1,5 nm bis 4,0 nm, noch bevorzugter 1,7 nm bis 3,5 nm aufweist.

6.   Die beschichtete Membran nach einem der vorstehenden Ansprüche, wobei das Trägermaterial eine BET-Oberfläche im Bereich von 2-35 m$^2$/g aufweist, der Katalysator 5 Gew% bis 35 Gew% Iridium enthält und der Iridium-Beladungsgrad der auf der Membranvorderseite vorliegenden katalysatorhaltigen Beschichtung 0,03 bis <0,20 mg Iridium/cm$^2$ beträgt.

7. Die beschichtete Membran nach einem der vorstehenden Ansprüche, wobei die BET-Oberfläche des Trägermaterials und der Iridiumgehalt des Katalysators der folgenden Bedingung genügen:

$$(1{,}003 \text{ (g/m}^2) \times \text{BET}) / (1 + 0{,}0117 \text{ (g/m}^2) \times \text{BET}) \leq \text{Ir-G} \leq (5{,}015 \text{ (g/m}^2) \times \text{BET}) / (1 + 0{,}0585 \text{ (g/m}^2) \times \text{BET})$$

wobei

BET die BET-Oberfläche, in m$^2$/g, des Trägermaterials ist und
Ir-G der Iridiumgehalt, in Gew%, des Katalysators ist.

8. Die beschichtete Membran nach einem der vorstehenden Ansprüche, wobei der Katalysator eine Kern-Schale-Struktur aufweist, in der das Trägermaterial den Kern und die iridiumhaltige Beschichtung die Schale bilden.

9. Die beschichtete Membran nach einem der vorstehenden Ansprüche, wobei das Iridium ausschließlich als Iridium in der Oxidationsstufe +3 (Iridium(III)) und/oder als Iridium in der Oxidationsstufe +4 (Iridium(IV)) vorliegt; und/oder wobei in der iridiumhaltigen Beschichtung ein atomares Verhältnis von Iridium(IV) zu Iridium (III), bestimmt über Röntgenphotoelektronenspektroskopie (XPS), von maximal 4,7/1,0 vorliegt.

10. Die beschichtete Membran nach einem der vorstehenden Ansprüche, wobei das Trägermaterial ein Oxid eines Übergangsmetalls, ein Oxid eines Hauptgruppenmetalls, SiO$_2$ oder ein Gemisch aus zwei oder mehr der vorstehend genannten Trägermaterialien ist.

11. Die beschichtete Membran nach einem der vorstehenden Ansprüche, wobei die auf der Membranvorderseite vorliegende Beschichtung eine Dicke im Bereich von 2 $\mu$m bis 10 $\mu$m, bevorzugter 3 $\mu$m bis 8 $\mu$m, noch bevorzugter 3 $\mu$m bis 7 $\mu$m aufweist.

12. Die beschichtete Membran nach einem der vorstehenden Ansprüche, wobei die auf der Membranvorderseite vorliegende Beschichtung ein Ionomer enthält, insbesondere ein Polymer, das Sulfonsäuregruppe-haltige Monomere enthält.

13. Die beschichtete Membran nach einem der vorstehenden Ansprüche, wobei auf der Rückseite der Membran eine Beschichtung aufgebracht ist, die einen Katalysator für die Wasserstoffentwicklungsreaktion enthält.

14. Verwendung der beschichteten Membran nach einem der Ansprüche 1-13 als Membran-Elektroden-Einheit für die Wasserelektrolyse.

15. Eine Wasserelektrolysezelle, enthaltend die beschichtete Membran nach einem der Ansprüche 1-13.

Figur 1

Figur 2

**EP 4 019 667 A1**

Europäisches Patentamt
European Patent Office
Office européen des brevets

**EUROPÄISCHER RECHERCHENBERICHT**

Nummer der Anmeldung

EP 20 21 7070

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | EP 3 764 443 A1 (HERAEUS DEUTSCHLAND GMBH & CO KG [DE]) 13. Januar 2021 (2021-01-13) * das ganze Dokument * ----- | 1-15 | INV. C25B1/04 C25B9/23 C25B11/054 C25B11/067 C25B11/091 |
| X | KARIMI FATEMEH ET AL: "Metal Carbide and Oxide Supports for Iridium-Based Oxygen Evolution Reaction Electrocatalysts for Polymer-Electrolyte-Membrane Water Electrolysis", ELECTROCHIMICA ACTA, ELSEVIER, AMSTERDAM, NL, Bd. 246, 15. Juni 2017 (2017-06-15), Seiten 654-670, XP085155043, ISSN: 0013-4686, DOI: 10.1016/J.ELECTACTA.2017.06.048 | 1-11, 13-15 | |
| Y | * das ganze Dokument * ----- | 12 | |
| X,D | WO 2005/049199 A1 (UMICORE AG & CO KG [DE]; LOPEZ MARCO [DE] ET AL.) 2. Juni 2005 (2005-06-02) | 1-6,8-15 | |
| Y | * das ganze Dokument * ----- | 12 | |

**RECHERCHIERTE SACHGEBIETE (IPC)**

C25B

Der vorliegende Recherchenbericht wurde für alle Patentansprüche erstellt

| Recherchenort | Abschlußdatum der Recherche | Prüfer |
|---|---|---|
| München | 6. Juni 2021 | Ritter, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 21 7070

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-06-2021

| Im Recherchenbericht angeführtes Patentdokument | Datum der Veröffentlichung | Mitglied(er) der Patentfamilie | Datum der Veröffentlichung |
|---|---|---|---|
| EP 3764443 A1 | 13-01-2021 | EP 3764443 A1<br>WO 2021004716 A1 | 13-01-2021<br>14-01-2021 |
| WO 2005049199 A1 | 02-06-2005 | AT 442901 T<br>CA 2543256 A1<br>CN 1874841 A<br>DK 1701790 T3<br>EP 1701790 A1<br>JP 5199575 B2<br>JP 2007514520 A<br>KR 20060100404 A<br>NO 331842 B1<br>US 2007292744 A1<br>US 2011223523 A1<br>WO 2005049199 A1 | 15-10-2009<br>02-06-2005<br>06-12-2006<br>25-01-2010<br>20-09-2006<br>15-05-2013<br>07-06-2007<br>20-09-2006<br>16-04-2012<br>20-12-2007<br>15-09-2011<br>02-06-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005049199 A1
- EP 2608297 A1
- EP 2608298 A1

**In der Beschreibung aufgeführte Nicht-Patentliteratur**

- **M. CARMO et al.** *International Journal of Hydrogen Energy,* 2013, vol. 38, 4901-4934
- **V. HIMABINDU et al.** *Materials Science for Energy Technologies,* 2019, vol. 2, 442-454
- **P. STRASSER et al.** *Adv. Energy Mater.,* 2017, vol. 7, 1601275
- **F.M. SAPOUNTZI et al.** *Progress in Energy and Combustion Science,* 2017, vol. 58, 1-35
- **M. BERNT et al.** Analysis of Voltage Losses in PEM Water Electrolyzers with Low Platinum Group Metal Loadings. *J. Electrochem. Soc.,* 2018, vol. 165, F305-F314
- **M. BERNT et al.** Current Challenges in Catalyst Development for PEM Water Electrolyzers. *Chem. Ing. Tech.,* 2020, vol. 92 (1-2), 31-39
- **M. BERNT et al.** *J. Electrochem. Soc.,* 2018, vol. 165, F305-F314
- **M. BERNT et al.** *Chem. Ing. Tech.,* 2020, vol. 92 (1-2), 31-39
- **C. VAN PHAM et al.** *Applied Catalysis B: Environmental,* 2020, vol. 269, 118762
- **A. KUSOGLU ; A.Z. WEBER.** *Chem. Rev.,* 2017, vol. 117, 987-1104
- **ABBOTT et al.** *Chem. Mater,* 2016, 6591-6604